# EUROPÄISCHE PATENTSCHRIFT

(11) **EP 1 280 673 B1**
(45) Veröffentlichungstag und Bekanntmachung des Hinweises auf die Patenterteilung: **01.02.2006**
(21) Anmeldenummer: 02700261.7
(22) Anmeldetag: 21.02.2002
(51) Int. Cl.: B60H 1/00

(54) **BEDIENEINHEIT MIT WENIGSTENS EINEM BEDIENELEMENT**
OPERATING UNIT COMPRISING AT LEAST ONE OPERATING ELEMENT
UNITE DE COMMANDE EQUIPEE D'AU MOINS UN ELEMENT DE COMMANDE

(30) Priorität: 31.03.2001 DE 10116266
(43) Veröffentlichungstag der Anmeldung: 05.02.2003
(73) Patentinhaber: DaimlerChrysler AG, 70567 Stuttgart (DE)
(72) Erfinder: BOGNER, Alexander, 71254 Ditzingen (DE); DAHM, Christoph, 71394 Kernen (DE)
(86) Internationale Anmeldenummer: PCT/EP2002/001827
(87) Internationale Veröffentlichungsnummer: WO 2002/078989

(56) Entgegenhaltungen:
- EP-A- 0 908 338
- DE-C- 19 926 652
- GB-A- 2 093 983
- US-A- 5 983 146

## Beschreibung

Die Erfindung betrifft eine Bedieneinheit mit wenigstens einem Bedienelement zur Einstellung eines Sollwertes, insbesondere einer Temperatur, einer Luftmenge und/oder einer Luftverteilung, wobei eine Automatikfunktion für die Luftmenge, Luftverteilung und Temperatur vorgesehen ist, die durch Betätigen des Bedienelementes aktiviert wird, und wobei durch Betätigen des Bedienelementes kleiner einer Betätigungszeit der gespeicherte Sollwert abgerufen wird und die Automatikfunktion aktiviert wird.

Eine gattungsgemäße Bedieneinheit mit wenigstens einem Bedienelement ist beispielsweise aus der DE 199 26 652 C1 bekannt, bei welchem ein Bedienelement vorgesehen ist, das mehrere Funktionen aufweist. Das Bedienelement ist als Taster ausgebildet. Dieser Taster schaltet bei normaler Betätigung um zwischen Frischluftzufuhr und Umluftbetrieb, dient also zur manuellen Einstellung entsprechend des Fahrerwunsches. Wird der Schalter jedoch durch einen Doppelklick betätigt, führt dies zur Einstellung des Automatikmodus. Der Automatikmodus wird also durch zweimalige schnelle Betätigung innerhalb eines eng begrenzten Zeitfensters eingestellt.

Bei dieser Art einer Bedieneinheit mit wenigstens einem Bedienelement ist von Nachteil, daß mit dem Bedienelement nur eine Automatikfunktion aufrufbar ist. Es ist insbesondere nicht möglich mehrere Automatikfunktionen mit einem einzigen Bedienelement einzustellen und abzurufen.

Die US 5983146 offenbart eine Bedieneinheit zur Einstellung eines Sollwertes, insbesondere einer Temperatur, Luftmenge oder einer Luftverteilung bei einer Klimaanlage, wobei eine Automatikfunktion vorgesehen ist, die durch Betätigen des Bedienelements aktiviert wird. Dabei werden durch Betätigen des Bedienelementes oder anderer Bedienelemente die Sollwerte für direkt oder indirekt vom Klimagerät gesteuerte Funktionen in einen bestimmten Automatikzustand gesetzt.

Weiterhin ist aus der EP 0 908 338 B1 eine Steueranordnung einer Kraftfahrzeug-Klimaanlage mit fahrerspezifischen Einstellungen bekannt. Die Steueranordnung weist eine Eingabevorrichtung, die eine Auswahl von Sätzen von Sollparametern ermöglicht, und einen Programmspeicher zum Speichern von zumindest zwei Sätzen von Sollparametern auf. In dem Programmspeicher sind vor einer ersten Inbetriebnahme für jeden potentiellen Benutzer sogenannte Standard-Sätze von SollParametern vorgesehen, die gleich der Anzahl von personalisierbaren Sollwertsätzen sind und im Betrieb jeweils selektiv durch von dem/den Insassen gewählten Sollparametern ersetzt werden.

Aufgabe der Erfindung ist eine Bedieneinheit mit einer Bedienfunktion anzubieten, die mehrere Automatikfunktionen vereint, aber für den Bediener bedienerfreundlich bleibt.

Erfindungsgemäß wird die Aufgabe durch die Merkmale des Anspruchs 1 gelöst. Vorteilhafte Aus- und Weiterbildungen des Erfindungsgegenstands sind durch die Merkmale der Unteransprüche gekennzeichnet.

Bei dieser Art einer Bedieneinheit ist von Vorteil, dass der Bediener mit einem Bedienelement mehrere Automatikfunktionen einstellen kann und auch Vorgaben für die Automatikfunktionen einspeichern kann, die wieder rücksetzbar sind. So kann der Bediener durch Betätigen nur eines Bedienelementes einen eingestellten Temperatursollwert als Automatikwert einspeichern, der durch Betätigen des Bedienelements abrufbar und auch auf den werkseitig vorgegebenen Wert rücksetzbar ist. Außerdem wird durch Aufruf der Automatikfunktionen auch automatisch die Luftmenge und die Luftverteilung eingestellt. Über die Betätigungszeit des Bedienelements ist eine Automatikfunktion speicherbar, abrufbar und wieder rücksetzbar.

Die Erfindung wird anhand eines Ausführungsbeispiels in Verbindung mit einer Figurenbeschreibung näher erläutert. Es zeigen
Fig. 1 eine Bedieneinheit mit wenigstens einem Bedienelement mit All-Auto-Funktion, sowie
Fig. 2 einen Verfahrensablauf zur All-Auto-Funktion.

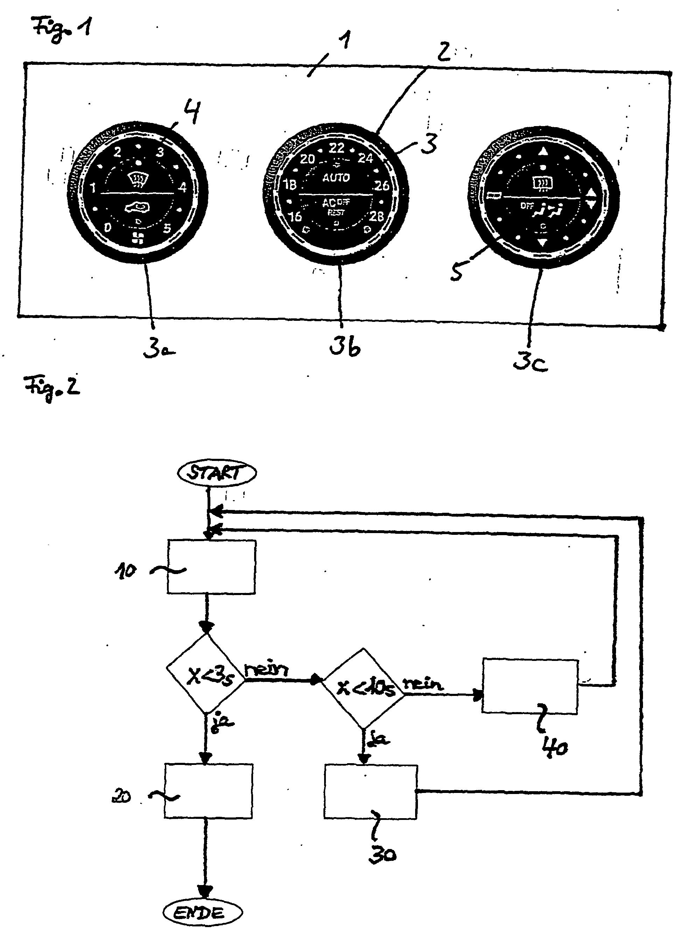

Fig. 1 zeigt eine Bedieneinheit 1 mit einem Bedienelement 2 mit einer sogenannten "All-Auto-Funktion" 3 für eine Klimaautomatik. Die Bedieneinheit wiest auch noch 2 weitere Bedienelemente 3a, 3c auf. Das Bedienelement 3a dient zur Einstellung der Luftmenge und damit zur Einstellung der Gebläsestufe. Das Bedienelement 3c dient zur Einstellung Luftverteilung zur Verteilung der Luft zu den einzelnen Auslassdüsen in den Fahrzeuginnenraum. Außerdem kann an diesem Bedienelement 3c noch die heizbare Heckscheibe aktiviert werden und es weist eine Funktion zur Abschaltung der Fondklimatisierung auf. Eine Abschaltung der Fondklimatisierung macht Sinn, wenn sich im Fond kein Insasse befindet, so daß der Rückraum nicht klimatisiert werden muss. Dann kann die Leistung für die optimale Einstellung des vorderen Fahrzeuginnenraumes genügen. Durch Betätigen dieses Bedienelementes 3 werden die Luftmenge, die Luftverteilung und die Solltemperatur automatisch eingestellt. Das Bedienelement 3 dient auch zur Abspeicherung eines anderen vom Bediener gewünschten Temperatursollwertes. So wünschen manche Insassen eine etwas wärmere Innenraumtemperatur. Diese Insassen können durch Einstellung des gewünschten Temperatursollwertes am Bedienelement 2 diesen durch Betätigen der Automatiktaste 3 über eine vorgegebene Betätigungszeit von beispielsweise größer x=10 Sekunden abspeichern und durch erneutes Betätigen kleiner y=3 Sekunden abrufen. Ein Zurücksetzen des Temperatursollwertes auf einen werkseitig oder einen vorgegebenen Wert erfolgt durch Betätigen über eine Betätigungszeit von größer z=3 Sekunden des Bedienelementes 3. Gleichzeitig können dann auch weitere Funktionen wie beispielsweise eine Defrostfunktion, die am Bedienelement 4 aktiviert wurde, deaktiviert werden oder die Klimatisierung im Fond, die am Bedienelement 5 deaktiviert wurde, wird erneut aktiviert. Sowohl die Defrostfunktion als auch die Rear-Off-Funktion können durch jeweils ein Bedienelement 4 und 5 in der Bedieneinheit 1 aktiviert werden. Auch kann die 4-Zonen-Klimatisierung durch ein Bedienelement deaktiviert werden. Diese gewöhnlich durch jeweils ein Bedienelement einzeln betätigbaren Funktionen können bei der Zurücksetzung ausgeschaltet werden. Hierbei können alle Funktionen zurückgesetzt werden, die über ein separates Bedienelement aktivierbar sind. So kann am Bedienelement 3c noch die heizbare Heckscheibe aktiviert werden. Auch diese Funktion kann mit der "All-Auto-Funktion" zurückgesetzt werden, also die heizbare Heckscheibe ausgeschaltet werden. Dies erfolgt durch Betätigen des Bedienelementes 3 über eine Betätigungszeit von größer 3 Sekunden.

Fig. 2 zeigt einen Verfahrensablauf zur All-Auto-Funktion. Die All-Auto-Funktion ist durch ein Bedienelement 3 wie in Fig. 1 gezeigt betätigbar. In 10 erfolgt eine Abfrage über die Betätigungszeit. Ist die Betätigungszeit x<3s wird in 20 die Automatikfunktion aktiviert. Bei einer Betätigungszeit x>3s erfolgt eine weitere Abfrage, ob die Betätigungszeit x<10s ist, folglich mit einem anderen Schwellwert. Bei einer Betätigungszeit von x<10s erfolgt, die Speicherung 30 der an den Bedienelementen 3a, 3b, 3c eingestellten Sollwerte. Durch Betätigen des Bedienelementes 3 über eine Betätigungszeit von größer 10 Sekunden wird in 40 der vom Bediener eingestellte Temperatursollwert dem werkseitig oder bereits definierten Temperatursollwert überschrieben. Dieser Wert wird dann in 20 abgerufen, wenn das Bedienelement 3 über eine Zeitdauer kleiner 3 Sekunden betätigt wird. Außerdem werden dann auch die Sollwerte der Luftmenge und der Luftverteilung abgerufen und vom Klimaregler eingestellt. Ein Zurücksetzen aller Werte erfolgt in 40 durch Betätigen des Bedienelementes 3 über eine Betätigungszeit von über 10 Sekunden. Die Speicherung, die Überschreibung und die Abfrage erfolgen folglich über die Betätigungszeit des Bedienelementes. Das Bedienelement ist beispielsweise ein Taster; so ist die Zeit, die das Bedienelement gedrückt gehalten wird, die Betätigungszeit.

## Patentansprüche

1. Bedieneinheit (1) mit wenigstens einem Bedienelement (2) zur Einstellung eines Sollwertes einer Temperatur, einer Luftmenge und/oder einer Luftverteilung, wobei eine Automatikfunktion für die Luftmenge, Luftverteilung und Temperatur vorgesehen ist, die durch Betätigen des Bedienelementes (3) aktiviert wird, und wobei durch Betätigen des Bedienelementes (3) kürzerals eine Betätigungszeit y ein gespeicherter Sollwert abgerufen wird und die Automatikfunktion aktiviert wird, wobei durch Betätigen des Bedienelementes (3) länger als einer Betätigungszeit x wenigstens einer der an den Bedienelementen, (3a, 3b, 3c) eingestellten Sollwerte gespeichert wird **dadurch gekennzeichnet, daß** durch Betätigen des Bedienelementes (3) länger als einer Betätigungszeit z die Sollwerte in den werkseitig festgesetzten Automatikzustand zurückgesetzt werden.

2. Bedieneinheit mit wenigstens einem Bedienelement nach Anspruch 1, **dadurch gekennzeichnet, daß** die Betätigungszeit x=10 Sekunden, die Betätigungszeit y=3 Sekunden und die Betätigungszeit z=3 Sekunden beträgt.

3. Bedieneinheit mit wenigstens einem Bedienelement nach den Ansprüchen 1 oder 2, **dadurch gekennzeichnet, daß** als weitere Funktion jede Funktion, die mittels eines Bedienelementes aktivierbar ist mittels der Automatikfunktion deaktiviert wird.

4. Bedieneinheit mit wenigstens einem Bedienelement nach den Ansprüchen 1 bis 3, **dadurch gekennzeichnet, daß** die DefrostFunktion (4), die Rear-Off-Funktion (5) zur Deaktivierung der Klimatisierung im Fond oder die Funktion zur Deaktivierung der 4Zonen-Klimatisierung als Funktion über die Automatikfunktion deaktiviert werden kann.

## Claims

1. Operator control unit (1) having at least one operator control (2) for setting a setpoint value of a temperature, an air quantity and/or an air distribution, an automatic function, which is activated by actuating the operator control (3), being provided for the air quantity, air distribution and temperature, and a stored setpoint value being called, and the automatic function being activated, by actuating the operator control (3) for shorter than an actuation time y, at least one of the setpoint values set at the operator controls (3a, 3b, 3c) being stored by actuating the operator control (3) for longer than an actuation time x, **characterized in that**, by actuating the operator control (3) for longer than an actuation time z, the setpoint values are reset to the automatic state which is permanently set at the factory.

2. Operator control unit having at least one operator control according to Claim 1, **characterized in that** the actuation time x = 10 seconds, the actuation time y = 3 seconds and the actuation time z = 3 seconds.

3. Operator control unit having at least one operator control according to Claims 1 or 2, **characterized in that**, as a further function, any function which can be activated by means of an operator control is deactivated by means of the automatic function.

4. Operator control unit having at least one operator control according to Claims 1 to 3, **characterized in that** the defrost function (4), the rear-off function (5) for deactivating the air-conditioning in the rear part of the passenger compartment or the function for deactivating the 4-zone air-conditioning can be deactivated as a function by means of the automatic function.

## Revendications

1. Unité de commande (1) comprenant au moins un élément de commande (2) pour régler une valeur de consigne d'une température, d'un volume d'air et/ou d'une distribution d'air, une fonction automatique étant prévue pour le volume d'air, la distribution d'air et la température, laquelle est activée en actionnant l'élément de commande (3), et une valeur de consigne enregistrée étant chargée et la fonction automatique étant activée en actionnant l'élément de commande (3) pendant moins longtemps qu'un temps d'actionnement y, l'actionnement de l'élément de commande (3) pendant plus longtemps qu'un temps d'actionnement x provoquant l'enregistrement d'au moins l'une des valeurs de consigne réglées au niveau des éléments de commande (3a, 3b, 3c), **caractérisée en ce que** l'actionnement de l'élément de commande (3) pendant plus longtemps qu'un temps d'actionnement z réinitialise les valeurs de consigne dans l'état automatique défini en usine.

2. Unité de commande comprenant au moins un élément de commande selon la revendication 1, **caractérisée en ce que** le temps d'actionnement x = 10 secondes, le temps d'actionnement y = 3 secondes et le temps d'actionnement z = 3 secondes.

3. Unité de commande comprenant au moins un élément de commande selon la revendication 1 ou 2, **caractérisée en ce que** comme fonction supplémentaire, toute fonction qui peut être activée au moyen d'un élément de commande est désactivée au moyen de la fonction automatique.

4. Unité de commande comprenant au moins un élément de commande selon les revendications 1 à 3, **caractérisée en ce que** la fonction de dégivrage (4), la fonction "Rear-Off" (5) destinée à désactiver la climatisation à l'arrière ou la fonction de désactivation de la climatisation dans 4 zones, en tant que fonction, peut être désactivée par le biais de la fonction automatique.
